# EUROPEAN PATENT APPLICATION

(11) **EP 3 582 106 A1**
(43) Date of publication of application: **18.12.2019**
(21) Application number: 18751222.3
(22) Date of filing: 12.01.2018
(51) Int. Cl.: G06F 9/54, G06F 13/00

(54) **CASH PROCESSING SYSTEM**

(30) Priority: 08.02.2017 JP 2017021169
(71) Applicant: Glory Ltd., Hyogo 670-8567 (JP)
(72) Inventor: OKA, Naoki, Himeji-shi Hyogo 670-8567 (JP); WAKABAYASHI, Nobumichi, Kakogawa-shi Hyogo 675-0019 (JP)
(74) Representative: SSM Sandmair
(86) International application number: PCT/JP2018/000672
(87) International publication number: WO 2018/146998

(57) **Abstract**

Provided is a cash processing system that can simplify the development and maintenance of terminal software and can also realize a user interface (UI) that is easy to use for an operator. The cash processing system comprises a plurality of cash processing devices, a terminal device and a server. The cash processing devices have a machine interface which differs by model. The server includes: an application provision unit that provides, to the terminal device, an application program implementing a common interface for realizing a function; and a relay processing unit that receives a processing request in accordance with the common interface specified by the execution of the application program on the terminal device, converts the processing request to a processing request in accordance with the machine interface for each model, and delivers the converted processing request to the cash processing device to be controlled.

## Description

### Technical Field

The present invention relates to a cash processing system installed at stores (for example, branches and/or sales offices) of a financial institution, such as a bank or a post office.

### Background Art

Typical stores of financial institutions are provided with a cash processing system that comprises a plurality of cash processing machines and terminal apparatuses, such as personal computers and tablet terminals, communicably connected to each other. In the cash processing system, input of information through an user interface (hereinafter called "UI") on the terminal apparatus allows the cash processing machine to execute cash processing (for example, depositing and withdrawing) and a maintenance operation. The cash processing machines comprise a money management machine that manages cash in a store, an automatic teller machine (ATM) that allows customers themselves to operate the machine to deposit and withdraw cash or the like, a teller machine (TM) that allows a teller to receive and withdraw cash, and a money change machine that automatically changes money.

Conventional cash processing systems adopt interfaces (hereinafter called "I/Fs") dedicated for the respective machine types of cash processing machines. The machine I/Fs adopted for the respective machine types comprise a communication I/F, an API (Application Programming Interface) or a UI (User Interface).

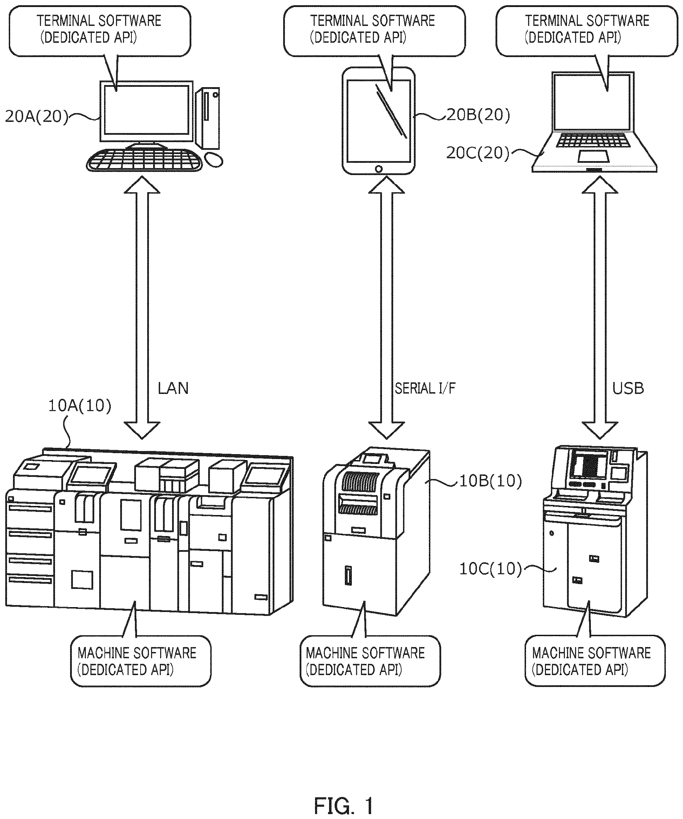

Specifically, to allow a terminal apparatus 20 to control the operation of the cash processing machine 10, for example, the terminal apparatus 20 and the cash processing machine 10 are connected to each other on a one-to-one basis via an I/F cable supporting a communication I/F [for example, a LAN I/F (Local Area Network I/F), a serial I/F, and a USB I/F (Universal Serial Bus I/F)] of the control-target cash processing machine 10, and information is transmitted and received in conformity with a communication protocol supporting the communication I/F (see FIG. 1).

Machine software executed by the control-target cash processing machine 10 is implemented in conformity with the specifications of each machine type. APIs to be used (including control commands using the APIs) vary according to the machine types. Accordingly, dedicated terminal software created using the APIs are installed in the terminal apparatus 20. A processing request is issued to the cash processing machine 10 by executing the terminal software.

Furthermore, since the cash processing machines 10 have various functions, UIs [typically, GUIs (Graphical User Interfaces)] provided by the terminal software are configured to be suitable for the control-target cash processing machines 10 and vary according to the machine types.

### Citation List

### Patent Literature

PLT 1
   Japanese Patent Application Laid-Open No. 2008-293152
PLT 2
   Japanese Patent Application Laid-Open No. 2015-222557
PTL 3
   Japanese Patent No. 5497282

### Summary of Invention

### Technical Problem

As described above, the machine I/Fs vary according to the machine types of the cash processing machines. Accordingly, software developers and maintenance operators of the terminal software are required to learn knowledges on the communication I/Fs and APIs for individual machine types of the cash processing machines. Thus, the conventional cash processing system tends to depend on individual skills with respect to implementing methods and implementation consequences of each product development. Accordingly, development and maintenance of the terminal software require great effort. The load on the software developers and maintenance operators are high.

The UI used in the terminal apparatus has a configuration suitable for execution of the functions that the control-target cash processing machine has. "Appearance," "operational feeling," and "operational procedures" are not unified. What is called look and feel, varies. Accordingly, an operator operating a plurality of cash processing machines is forced to perform operations that are different for each machine type even though the processing content is the same. The UIs without uniformity can be a factor of impeding improvement of efficiency of maintenance operations.

Meanwhile, techniques for cooperation between machines with different IFs include, for example, PTLs 1 and 2. Furthermore, techniques using WebAPI include, for example, PTL 3. Unfortunately, control commands and rules in the cash processing machines are significantly complicated. Accordingly, it is difficult to apply the techniques disclosed in PTLs 1 to 3 to the cash processing system to construct a framework for standardized and unified machine I/Fs.

An object of the present invention is to provide a cash processing system that can facilitate the development and maintenance of terminal software, and achieve a UI convenient for the operator.

### Solution to Problem

A cash processing system according to the present invention comprises: a plurality of cash processing machines that have a function pertaining to common cash processing; a terminal apparatus that controls operations of the cash processing machines; and a server to be connected to the cash processing machines and the terminal apparatus via a network, wherein: the cash processing machines comprise device interfaces that are different for each machine type, and the server comprises: an application providing section that provides the terminal apparatus with an application program provided with a common interface for achieving the function; and a relay processing section that receives a processing request in conformity with the common interface designated by execution of the application program in the terminal apparatus, converts the processing request into a processing request in conformity with one of the device interfaces for each machine type, and passes the converted processing request to at least one of the cash processing machines which is to be controlled.

### Advantageous Effects of Invention

The present invention provides the cash processing system that can facilitate the development and maintenance of terminal software, and achieve a UI convenient for the operator.

### Brief Description of Drawings

FIG. 1 illustrates a conventional cash processing system;
FIG. 2 illustrates a cash processing system according to an embodiment;
FIG. 3 illustrates an example of a configuration of a cash processing machine;
FIG. 4 illustrates an example of a configuration of a terminal apparatus;
FIG. 5 illustrates an example of a configuration of a server;
FIG. 6 is a sequence diagram illustrating an example of cash processing executed in the cash processing system;
FIG. 7 illustrates an example of a service providing screen;
FIG. 8 illustrates an example of a service providing screen;
FIG. 9A illustrates an example of a service providing screen;
FIG. 9B illustrates an example of a service providing screen;
FIG. 9C illustrates an example of a service providing screen;
FIG. 10 illustrates an example of a service providing screen;
FIG. 11A illustrates an example of a service providing screen;
FIG. 11B illustrates an example of a service providing screen;
FIG. 12A illustrates an example of a service providing screen;
FIG. 12B illustrates an example of a service providing screen;
FIG. 12C illustrates an example of a service providing screen;
FIG. 13A illustrates an example of a service providing screen;
FIG. 13B illustrates an example of a service providing screen; and
FIG. 14 illustrates an example of a service providing screen.

### Description of Embodiments

Hereinafter, embodiments of the present invention are described in detail with reference to the accompanying drawings.

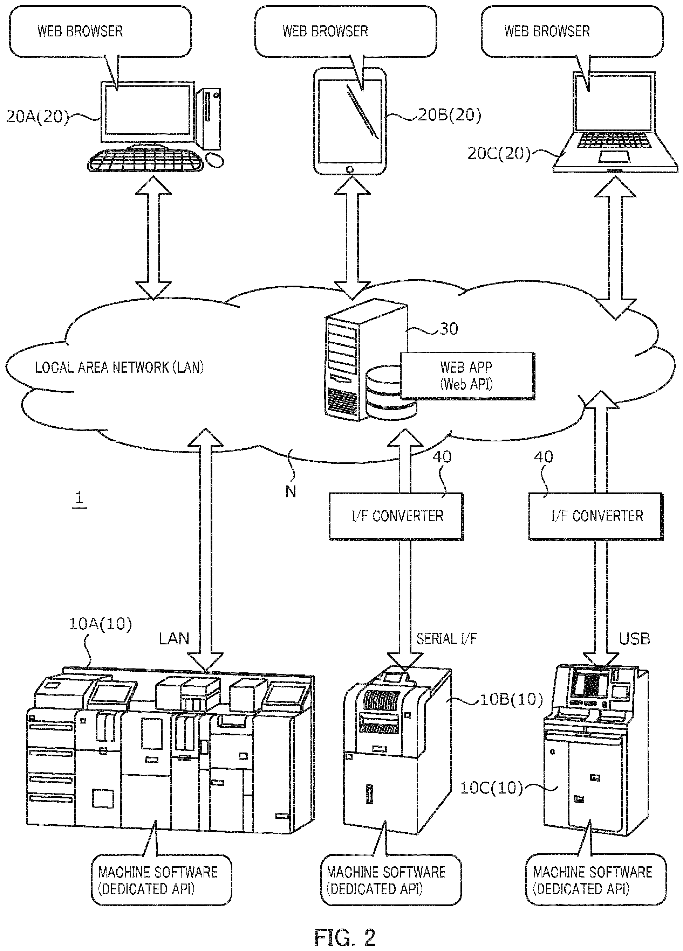

FIG. 2 illustrates a cash processing system 1 according to an embodiment of the present invention.

As illustrated in FIG. 2, the cash processing system 1 comprises a plurality of cash processing machines 10, terminal apparatuses 20, and a server 30. The cash processing machines 10, the terminal apparatuses 20, and the server 30 are communicably connected to each other via a network N. The network N is, for example, an enterprise LAN (a wired LAN or a wireless LAN). The cash processing system 1 is installed at stores of a financial institution, such as a bank or a post office, for example.

FIG. 2 illustrates a money management machine 10A, a teller machine 10B, and a money change machine 10C, as examples of the cash processing machines 10. Typically, a plurality of teller machines 10B and a plurality of money change machines 10C are installed. A desktop personal computer 20A, a tablet terminal 20B, and a laptop computer 20C are illustrated as examples of terminal apparatuses 20.

The plurality of cash processing machines 10 have a function related to common cash processing (for example, a depositing and withdrawing process). The plurality of cash processing machines 10 have machine I/Fs that are different for each machine type. The machine I/Fs include communication I/Fs, APIs (including control commands provided with APIs), and UIs.

In FIG. 2, the communication I/F of the money management machine 10A is a LAN I/F, and the communication I/F of the teller machine 10B is a serial I/F, and the communication I/F of the money change machine 10C is a USB I/F. In the case where the network N is an enterprise LAN, the teller machine 10B and the money change machine 10C, which include no LAN I/F, are connected to the network N via I/F converters 40.

In the cash processing system 1, the server 30 is a service providing infrastructure for providing virtualized machine I/Fs, receives a processing request to be issued by the terminal apparatus 20 to the cash processing machine 10, passes the processing request to the control-target cash processing machine 10, and causes this cash processing machine 10 to execute the requested cash processing. An operator handling the cash processing machine 10 can control the operations of all the cash processing machines 10 using the UI on the terminal apparatus 20.

In this embodiment, a case is described where the processing request is issued to the cash processing machine 10 by operating a web application program provided by the server 30, on a web browser of the terminal apparatus 20. In this case, the web browser of the terminal apparatus 20 is the UI for issuing the processing request to the cash processing machine 10. Consequently, the API and UI used by the terminal apparatus 20 to issue the processing request to the cash processing machine 10 are common irrespective of the control-target cash processing machine 10. Meanwhile, the cash processing machine 10 and the server 30 communicate with each other through a dedicated I/F (for example, a dedicated API) supporting the cash processing machine 10.

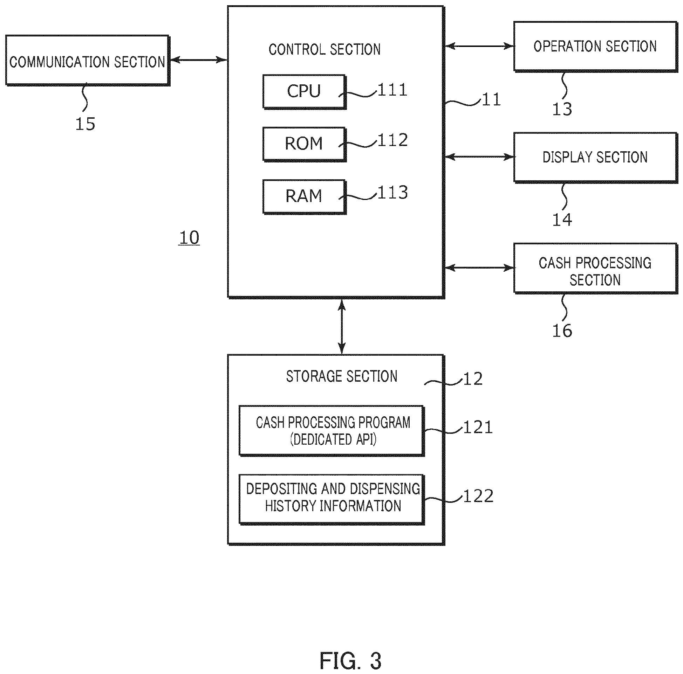

FIG. 3 illustrates an example of the configuration of the cash processing machine 10.

As shown in FIG. 3, the cash processing machine 10 comprises a control section 11, a storage section 12, an operation section 13, a display section 14, a communication section 15, and a cash processing section 16.

The control section 11 comprises a CPU 111 (Central Processing Unit) serving as an operation/control device, a ROM 112 (Read Only Memory) serving as a main memory device, and a RAM 113 (Random Access Memory). The ROM 112 stores a base program called a BIOS (Basic Input Output System), and basic setting data. The CPU 111 reads a program (for example, a cash processing program) according to the processing contents from the ROM 112 or the storage section 12, loads the program on the RAM 113, and executes the loaded program, thereby controlling the operation of each block of the cash processing machine 10 in a centralized manner.

The storage section 12 is an auxiliary storage apparatus such as a hard disk drive (HDD) or a solid state drive (SSD). The storage section 12 may be a disk drive that drives an optical disk, such as a compact disc (CD) or a digital versatile disc (DVD), or a magneto-optical disk (MO) or the like, to read and write information. Alternatively, the storage section 12 may be, for example, a memory card, such as a USB memory or an SD card.

The storage section 12 stores an OS (Operating System, not illustrated), and a cash processing program 121 (machine software). Typically, a dedicated API is used for the cash processing program 121 with respect to each machine type of the cash processing machine 10. That is, even if the contents of the processing (for example, the depositing and withdrawing process) executed in the cash processing machine 10 is the same, control commands that are different for each machine type are used. The storage section 12 stores depositing and withdrawing history information 122 for managing the denomination, value and the like of deposited or withdrawed money.

The operation section 13 is, for example, a keyboard with which characters and numbers can be input or a pointing device, such as a mouse. The display section 14 is a display, such as a liquid crystal display or an organic EL display, that displays information necessary for cash deposit and withdrawal in the cash processing machine 10. The operation section 13 and the display section 14 may be composed of a flat panel display with a touch screen.

The communication section 15 is, for example, a communication I/F, such as a LAN I/F, a serial I/F, or a USB I/F. The control section 11 transmits and receives various pieces of information to and from the server 30 connected to the network N, according to the communication protocol supporting the communication I/F for each machine type, by executing the software stored in the ROM 112 (what is called firmware). The communication I/F for near field wireless communication, such as NFC (Near Field Communication) or Bluetooth (TM), can be applied to the communication section 15.

The cash processing section 16 is a unit for depositing or withdrawing money. For example, in the case of the money management machine 10A, the cash processing section 16 comprises a new series note withdrawing section, a bound notes withdrawing section, a loose notes depositing and withdrawing section, a coin-roll withdrawing section, and a loose coins depositing and withdrawing section. In addition, the cash processing section 16 comprises a recognition and counting section that counts while recognizing deposited money or withdrawn money.

The cash processing machine 10 executes designated cash processing, on the basis of an input operation issued through the operation section 13, or a processing request issued by the server 30. Specifically, the control section 11 executes the cash processing program 121 on the basis of the control command included in the input operation or the processing request, thereby executing predetermined cash processing.

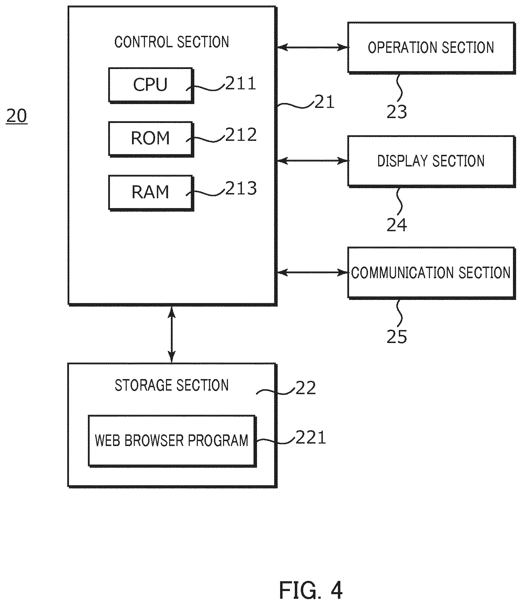

FIG. 4 illustrates an example of the configuration of the terminal apparatus 20.

As shown in FIG. 4, the terminal apparatus 20 is a general-purpose computer that comprises a control section 21, a storage section 22, an operation section 23, a display section 24, and a communication section 25. The basic configuration of each block is analogous to that of the cash processing machine 10. Accordingly, the detailed description is omitted.

The control section 21 comprises a CPU 211, a ROM 212, and a RAM 213. The CPU 211 reads a program according to the processing contents from the ROM 212 or the storage section 22, loads the program on the RAM 213, and executes the loaded program, thus controlling the operation of each block of the terminal apparatus 20 in a centralized manner.

The storage section 22 is, for example, an auxiliary storage device, such as an HDD or an SSD. A web browser program 221 for using WWW (World Wide Web) is installed in the storage section 22.

The operation section 23 and the display section 24 are used to control the operation of the cash processing machine 10 and maintain the cash processing machine 10, through the UI displayed on the web browser.

The communication section 25 is, for example, a LAN I/F. The control section 21 transmits and receives various pieces of information to and from the server 30 connected to the network N, by software stored in the ROM 212 (what is called firmware), according to the communication protocol (for example, TCP (Transmission Control Protocol)/IP (Internet Protocol)) supporting the LAN I/F.

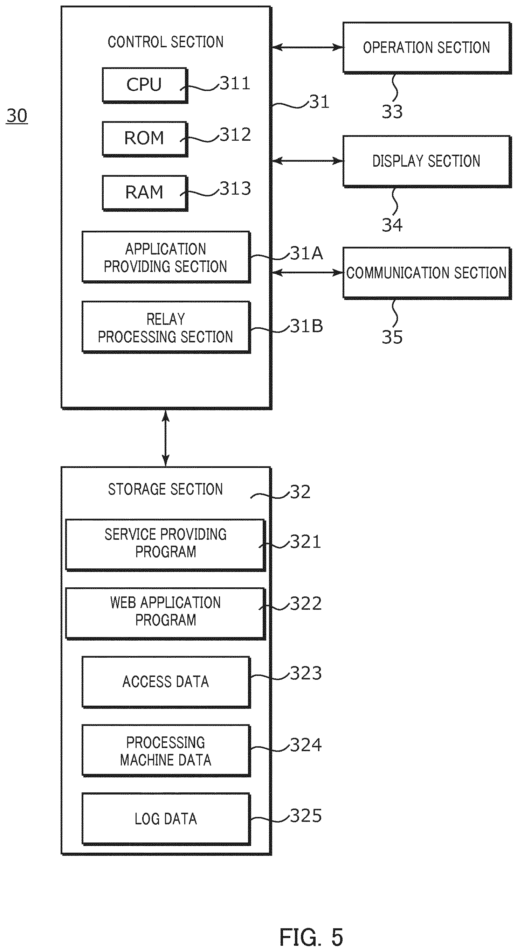

In the terminal apparatus 20, the web browser program 221 cooperates with a web application program 322 (see FIG. 5) provided by the server 30, thereby allowing a processing request issued to the cash processing machine 10 to be executed. The operator can control the operation of the cash processing machine 10 and maintain the cash processing machine 10, through the UI on the web browser.

FIG. 5 illustrates an example of the configuration of the server 30.

As shown in FIG. 5, the server 30 is a general-purpose computer that comprises a control section 31, a storage section 32, an operation section 33, a display section 34, and a communication section 35. The basic configuration of each block is analogous to that of the cash processing machine 10. Accordingly, the detailed description is omitted.

The control section 31 comprises a CPU 311, a ROM 312, and a RAM 313. The CPU 311 reads a program according to the processing contents from the ROM 312 or the storage section 32, loads the program on the RAM 313, and executes the loaded program, thus controlling the operation of each block of the server 30 in a centralized manner.

The storage section 32 is, for example, an auxiliary storage device, such as an HDD. The storage section 32 stores, for example, a service providing program 321 that processes a request issued by the terminal apparatus 20 to the cash processing machine 10, and a web application program 322 to be provided for the terminal apparatus 20. The web application program 322 is provided with WebAPI for achieving the functions of the cash processing machine 10.

The storage section 32 further stores access data 323, processing machine data 324, and log data 325. The access data 323 includes management data for managing access situations from the terminal apparatus 20 to the server 30, and identification data for identifying the terminal apparatus 20. The processing machine data 324 includes setting data pertaining to connection between the server 30 and the cash processing machine 10 (for example, the communication I/F and APIs (including control commands) of the cash processing machine 10 and the like), data pertaining to the operation state of the connected cash processing machine 10, and data pertaining to cash (for example, the inventory amount) managed by the cash processing machine 10. The log data 325 is data pertaining to the processing executed by the cash processing machine 10. These data items are updated as needed. According to a certain mode of holding the access data 323, the processing machine data 324 and the log data 325, a database server, a file server or the like may be used.

The operation section 33 and the display section 34 are used when the server 30 is maintained, for example, when the service providing program 321 or the web application program 322 is updated.

The communication section 35 is, for example, a LAN I/F. The control section 31 transmits and receives various pieces of information to and from the cash processing machine 10 and the terminal apparatus 20 connected to the network N, according to the communication protocol (for example, TCP/IP) supporting the LAN I/F, by means of the software stored in the ROM 312 (what is called firmware).

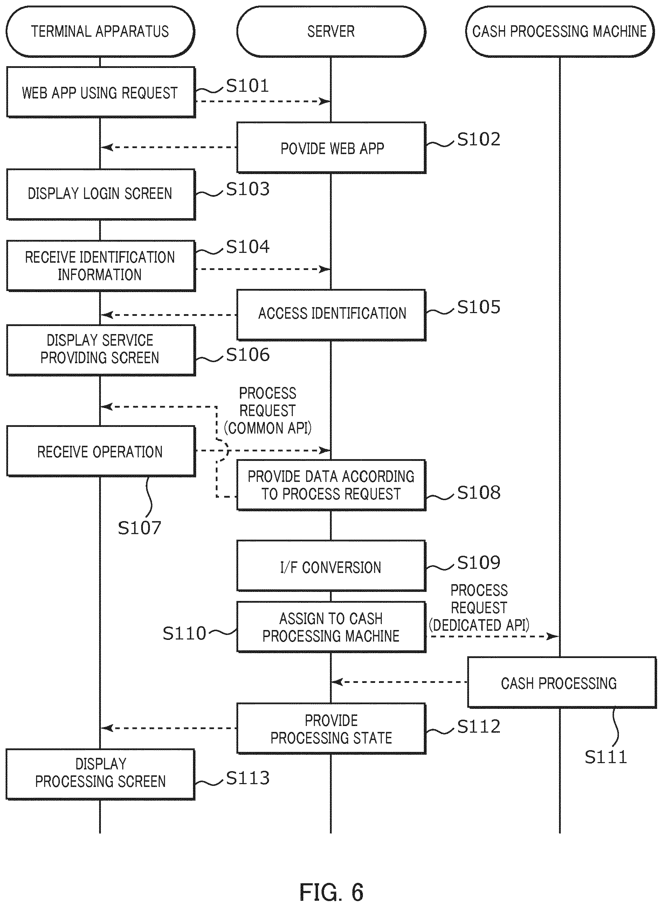

In the server 30, the control section 31 functions as an application providing section 31A and a relay processing section 31B, by executing the service providing program 321. The application providing section 31A provides the web application program 322, upon request by the terminal apparatus 20. The relay processing section 31B receives a processing request in conformity with the common I/F designated by execution of the web application program 322 in the terminal apparatus 20, converts the request into a processing request in conformity with the machine I/F for each machine type, and passes the converted request to the control-target cash processing machine 10. These functions are described with reference to the sequence diagram of FIG. 6.

The control section 31 (relay processing section 31B) of the server 30 always obtains the state of the cash processing machine 10 managed by this control section 31, and stores the state in the storage section 32, thus holding and monitoring the state change of the cash processing machine 10. The control section 31 (relay processing section 31B) generates the log data as required, and stores the data in the storage section 32.

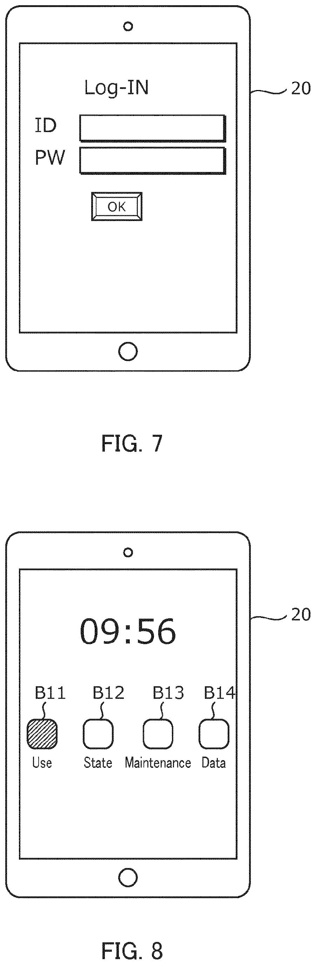

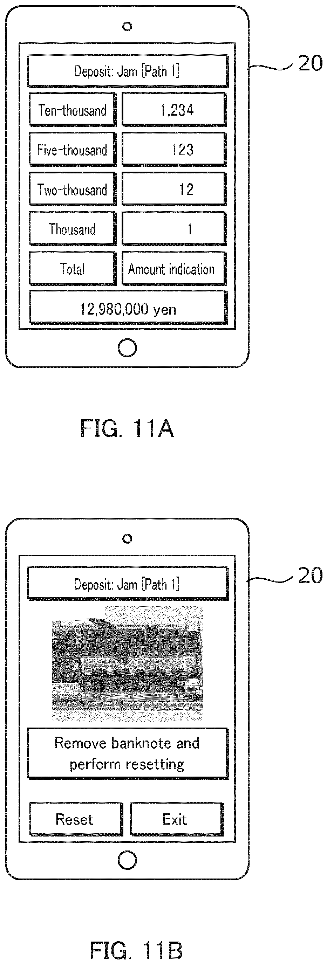

FIG. 6 is a sequence diagram illustrating an example of cash processing executed in the cash processing system 1. FIGS. 7 to 11A and 11B illustrate examples of service providing screens (UIs displayed on the web browser) displayed on the terminal apparatus 20. The cash processing program 121, the web browser program 221 and the service providing program 321 are activated in the cash processing machine 10, the terminal apparatus 20 and the server 30, respectively.

In step S101, the terminal apparatus 20 transmits a web application use request to the server 30. This processing is performed by the operator designating the URL (Uniform Resource Locator) of the web application to the web browser and issuing the request to the server 30 (HTTP Request).

In step S102, in response to the use request by the terminal apparatus 20, the server 30 provides the terminal apparatus 20 with the application program (HTTP Response; processing performed by serving as the application providing section 31A). In the server 30, the access situations from the terminal apparatus 20 are stored as the access data 323 in the storage section 32. The access data 323 may include information, such as a session ID or cookie. In the terminal apparatus 20, the web application operates on the web browser. The following processing by the terminal apparatus 20 is performed by the web application.

In step S103, the terminal apparatus 20 displays a login screen (see FIG. 7) on the web browser. The operator inputs preset identification information (here, a login ID and a password) on the login screen.

In step S104, the terminal apparatus 20 receives the identification information input by the operator, and transmits the information to the server 30.

In step S105, the server 30 performs login identification of the operator (access identification). Specifically, the server 30 determines whether to allow the operator to use the service or not, on the basis of the identification information obtained from the terminal apparatus 20. Data for identification information matching is stored in the storage section 32, for example. When the server 30 identifies that the operator is a qualified operator allowed for use, the server 30 transmits data on the service providing screen to the terminal apparatus 20.

In step S106, the terminal apparatus 20 displays the service providing screen (see FIG. 8) on the web browser. On the service providing screen, for example, as shown in FIG. 8, buttons B11 to B14 respectively corresponding to "Use," "State," "Maintenance," and "Data" are presented as an executable processing menu. The button B11 corresponding to "Use" is a button to be selected when the cash processing machine 10 is caused to execute desired cash processing. The button B12 corresponding to "State" is a button to be selected when the operation state of the connected cash processing machine 10 or cash (for example, the inventory amount) managed by the cash processing machine 10 is verified. The button B13 corresponding to "Maintenance" is a button to be selected when the maintenance operation for the cash processing machine 10 is performed. The button B14 corresponding to "Data" is a button to be selected when the log of the cash processing machine 10 is verified. The operator can select processing to be executed, by operating any of the buttons B11 to B14 respectively corresponding to "Use," "State," "Maintenance" and "Data."

In step S107, the terminal apparatus 20 receives a selection operation by the operator on the service providing screen, and transmits a request corresponding to the operation as a processing request for the cash processing machine 10 to the server 30. The processing request is issued by the web application. Accordingly, this request is issued in conformity with WebAPI. That is, the I/F of the processing request by the terminal apparatus 20 is common irrespective of the machine type of the control-target cash processing machine 10. Parameters pertaining to the operator and the control-target cash processing machine 10 are added to the WebAPI.

If the processing request by the terminal apparatus 20 is not a request for designating execution of the cash processing, the server 30 transmits data according to the processing request to the terminal apparatus 20 (processing performed by serving as the relay processing section 31B) in step S108. The data according to such a processing request is provided on the basis of information managed by the relay processing section 31B without generating the I/F (for example, issuing a sense command) for the cash processing machine 10. Processing requests that do not designate execution of cash processing include, for example, a processing request pertaining to exchange in a stage before designation of execution of cash processing, a processing request for verifying the operation state of the connected cash processing machine 10 and cash managed by the cash processing machine 10 (for example, the inventory amount), a processing request for performing the maintenance operation for the cash processing machine 10, and a processing request for verifying the log of the cash processing machine 10. The data according to the processing request is, for example, data on the service providing screen for receiving the next selection operation, and data pertaining to the operation state, the inventory amount and the log of the cash processing machine 10.

In the terminal apparatus 20, the service providing screen is updated on the basis of the data provided from the server 30. If the processing request by the terminal apparatus 20 is not a request for designating execution of cash processing, the processing of steps S107 and S108 are repeated. The communication between the terminal apparatus 20 and the server 30 may use information allowing management of the state of the processing (for example, a mechanism, such as a session ID or cookie).

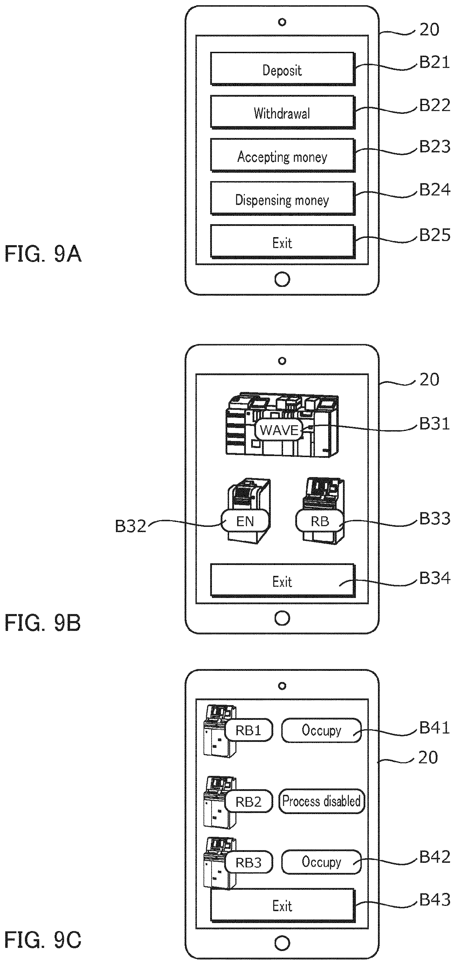

Here, referring to FIGS. 9A to 9C, specific screen transition of the service providing screens in a case of causing the cash processing machine 10 to execute desired cash processing, is described. Repetition of the processing of steps S107 and S108 achieves the screen transition.

On the service providing screen illustrated in FIG. 8, for example, when the button B11 corresponding to "Use" is operated by the operator, the screen transitions to the service providing screen for designating the type of cash processing (the function of the cash processing machine 10) to be executed by the cash processing machine 10 (see FIG. 9A). In FIG. 9A, buttons B21 to B24 respectively corresponding to "Deposit," "Withdrawal," "Accepting money" and "Dispensing money" are presented as the types of cash processing executable by the cash processing machine 10. The operator can select cash processing to be executed, by operating any of the buttons B21 to B24 respectively corresponding to "Deposit," "Withdrawal," "Accepting money" and "Dispensing money." When a button B25 corresponding to "Exit" is operated, for example, the screen transitions to the directly previous service providing screen (see FIG. 8).

On the service providing screen illustrated in FIG. 9A, when any of the buttons B21 to B24 corresponding to "Deposit," "Withdrawal," "Accepting money" and "Dispensing money" is operated by the operator, the screen transitions to the service providing screen for designating the control-target machine type (see FIG. 9B). Here, the case where the button B21 corresponding to "Deposit" is operated on the service providing screen illustrated in FIG. 9A is described.

In FIG. 9B, buttons B31 to B33 respectively corresponding to "WAVE" indicating the money management machine 10A, "EN" indicating the teller machine 10B, and "RB" indicating the money change machine 10C are displayed as the machine types that can be designated as the control target, that is, the machine types having a deposit function. The operator can select the machine type of the cash processing machine 10 to be caused to execute the deposit processing, by operating any of the buttons B31 to B33 respectively corresponding to "WAVE," "EN" and "RB." When a button B34 corresponding to "Exit" is operated, for example, the screen transitions to the directly previous service providing screen (see FIG. 9A) or the service providing screen indicating the processing menu (see FIG. 8).

On the service providing screen illustrated in FIG. 9B, when any of the buttons B31 to B33 respectively corresponding to "WAVE," "EN" and "RB" is operated by the operator, the screen transitions to the service providing screen for designating the control-target cash processing machine 10 (see FIG. 9C). Here, the case where the button B33 corresponding to "RB" is operated on the service providing screen illustrated in FIG. 9B is described.

FIG. 9C presents that the money change machines 10C are three machines "RB1," "RB2" and "RB3," and "RB1" and "RB3" thereamong can perform the deposit processing but "RB2" is in a processing-disabled state. For example, the cash processing machine 10 performing cash processing under control by another terminal apparatus 20 is presented to be in the processing-disabled state. The operator can select the money change machine 10C to be caused to execute the deposit processing, by operating any of the "Occupy" buttons B41 and B42, which corresponds to the control-target money change machine 10C (RB1 or RB3). The selection operation in FIG. 9C finally determines the contents of the cash processing to be executed by the cash processing machine 10. The selected cash processing machine 10 transitions into an occupied state, and is subjected to exclusive control against processing requests by the other terminal apparatuses 20. When a button B43 corresponding to "Exit" is selected, for example, the screen transitions to the directly previous service providing screen (see FIG. 9B) or the service providing screen indicating the processing menu (see FIG. 8).

Thus, according to the example shown in FIGS. 9A to 9C, in the server 30, the relay processing section 31B presents a cash processing machine 10 capable of executing the cash processing, in response to the processing request that is issued by the terminal apparatus 20 and includes designation of the cash processing (the function of the cash processing machine 10). Accordingly, the operator can easily set the contents of the cash processing to be executed by the cash processing machine 10.

According to the processing of steps S107 and S108, the operator can check the state of the cash processing machine 10. For example, on the service providing screen illustrated in FIG. 8, when the button B12 corresponding to "State" is operated by the operator, the control section 31 (relay processing section 31B) of the server 30 presents the state of the cash processing machine 10 held in advance by the server 30, specifically, the operation state of the control-target cash processing machine 10 and the cash managed by the cash processing machine 10 (for example, the inventory amount), in response to the processing request by the terminal apparatus 20. The processing request by the terminal apparatus 20 is for the control-target cash processing machine 10. The processing request does not reach the cash processing machine 10. The server 30 holding the state of the cash processing machine 10 responds to the processing request.

Returning to FIG. 6, a case is described where the processing request by the terminal apparatus 20 is a request for designating execution of cash processing. For example, the processing request accompanying the operation of any of the "Occupy" buttons B41 and B42 in FIG. 9C is the processing request for designating execution of cash processing.

In this case, in step S109, the server 30 converts the processing request that is issued by the terminal apparatus 20 and conforms to the common API (here, webAPI), into a processing request in conformity with the dedicated API of the control-target cash processing machine 10, with reference to the setting data included in the processing machine data 324 (see FIG. 5) (processing performed by serving as the relay processing section 31B). The control command indicating the cash processing (for example, the deposit processing) included in the processing request by the terminal apparatus 20 is common irrespective of the control-target cash processing machine 10, but is converted by the processing of step S109 into a control command set in conformity with each machine type of the cash processing machine 10. The conversion absorbs the differences of the I/Fs of the individual machine types of the cash processing machines 10, thereby allowing the cash processing machines 10 to be commonly and integrally controlled.

In step S110, the server 30 passes the converted processing request to the control-target cash processing machine 10 (processing performed by serving as the relay processing section 31B). In this case, it is preferred that the server 30 check the operator authorization, the pairing situations between the terminal apparatus 20 and the control-target cash processing machine 10, and the state of the control-target cash processing machine 10 in advance. When the check result of the preliminary check is NG, that is, when the server 30 determines that the cash processing machine 10 cannot execute the processing designated by the processing request, control of the cash processing machine 10 by the terminal apparatus 20 cannot be executed. Accordingly, the server 30 notifies the terminal apparatus 20 of this inexecutability, and stops the processing.

In step S111, the cash processing machine 10 executes the cash processing designated by the processing request in conformity with the dedicated API. At this time, the cash processing machine 10 transmits data pertaining to the processing state (count data, error data and the like) to the server 30. Data pertaining to the processing state provided from the server 30 to the cash processing machine 10 conforms to the dedicated API.

In step S112, the server 30 updates the processing machine data 324 and the log data 325 on the basis of the data pertaining to the processing state from the cash processing machine 10, converts the processing state in conformity with WebAPI, and transmits the converted state to the terminal apparatus 20 (processing performed by serving as the relay processing section 31B).

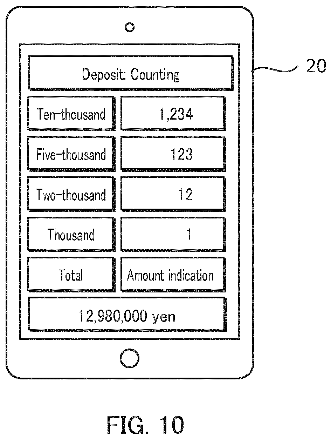

In step S113, the terminal apparatus 20 updates the service providing screen on the basis of the data pertaining to the processing state provided from the server 30. For example, as illustrated in FIG. 10, the deposit situations in the control-target cash processing machine 10 are updated as needed, on the basis of the count data. For example, in case a failure occurs in the control-target cash processing machine 10 during cash processing, the terminal apparatus 20 may present the fact of occurrence of the failure on the service providing screen (see FIG. 11A). FIG. 11A presents a fact of occurrence of a jam on "Path 1" during the deposit processing. In this case, as illustrated in FIG. 11B, the terminal apparatus 20 may depict a site where the jam occurs, and guide the operator to remove a banknote and perform resetting.

During execution of the cash processing in the cash processing machine 10, the processing of steps S111 to S113 are repeated. After the cash processing (step in S111) in the cash processing machine 10 is finished, the completion of the cash processing is notified to the terminal apparatus 20, and the screen transitions to a predetermined service providing screen (for example, the processing menu screen illustrated in FIG. 8).

The cash processing system 1 according to this embodiment thus comprises the plurality of cash processing machines 10 that have a function pertaining to common cash processing, the terminal apparatus 20 that controls operations of the cash processing machines 10, and the server 30 connected to the cash processing machines 10 and the terminal apparatus 20 via the network N. The cash processing machines 10 have the machine I/Fs that are different for each machine type. The server 30 comprises: an application providing section 31A that provides the terminal apparatus 20 with a web application program (application program) provided with WebAPI (common I/F) for achieving the function pertaining to cash processing; and a relay processing section 31B that receives a processing request in conformity with the WebAPI designated by execution of the web application program in the terminal apparatus 20, converts the request into a processing request in conformity with the machine I/F for each machine type, and passes the converted request to the control-target cash processing machine 10.

According to the cash processing system 1, the I/F of the terminal apparatus 20 is common irrespective of the machine I/F of the control-target cash processing machine 10. Consequently, development and maintenance of the terminal software (here, the web application program) can be facilitated. The terminal apparatus 20 can control the operations of the cash processing machines 10 of varying machine types, through the same UI. Consequently, the UI convenient for the operator can be achieved. Possible addition of a new machine type to the cash processing system 1 can be easily supported by updating the web application program in the server 30.

The cash processing system 1 can achieve a highly flexible operation where a plurality of cash processing machines 10 are combined. For example, in case the desired teller machine 10B cannot be used because this machine is occupied or causes a failure in situations where cash is intended to be stored in the cash processing machine 10 at any rate, the standby money change machine 10C is selected as the control-target cash processing machine 10, and cash can be stored therein.

The cash processing machine 10 is only required to be provided with a processing layer for tasks controlling mechanisms (what is called mechanism control) and therebelow. Accordingly, higher-level layers (for example, a function pertaining to state transition management by what is called a main task) required for achieving a certain processing unit (for example, the deposit process and the withdrawing process) can be transferred to the server 30. The transfer can thus reduce the hardware resources (for example, CPUs, memories and the like) in the cash processing machine 10. Consequently, reduction in the cost of the cash processing machine 10 can be facilitated. Version upgrade of the function only requires update of the software implemented on the server 30. Setting and control of the operation authorization of the cash processing machine 10 by the operator can be performed on the server 30 in a centralized manner. Accordingly, the operation efficiency of the maintenance operation is improved.

The invention made by the present inventors has thus been described on the basis of the embodiments. However, the present invention is not limited to the embodiments described above. The present invention can be modified in a range without departing from the gist thereof.

For example, in the embodiment, the server 30 may comprise the communication I/F supporting the cash processing machine 10, as the communication section 35. The cash processing machine 10 and the server 30 may be directly connected to each other via supported I/F cables (for example, a serial cable and a USB cable). In this case, the control section 31 (relay processing section 31B) of the server 30 functions as an I/F converter that converts the communication I/F, and communicates with the cash processing machine 10 in conformity with the communication protocol supporting the communication I/F of the cash processing machine 10. The communication protocol supporting the communication I/F of the cash processing machine 10 is included in the processing machine data 324.

For example, in the embodiment, the network N may be the Internet, to which the cash processing machines 10, the terminal apparatuses 20 and the server 30 (what is called a cloud server) are connected via a wide area communication network. In this case, a LAN comprising the cash processing machines 10 and the terminal apparatuses 20 may be constructed, and the LAN may be connected to the wide area communication network via a gateway.

Terminal software (native application program) supporting the environment (OS and the like) of the terminal may be installed in the terminal apparatus 20, which may communicate with the server 30 using the terminal software. The terminal software may be what is called a hybrid application program, which wraps a web browser to thereby operate a web application program. In this case, the control section 31 (application providing section 31A) of the server 30 provides the terminal apparatus 20 with the application program, using a mechanism, such as an application market. The terminal software can be easily updated by providing the terminal apparatus 20 with the update program via the network N from the server 30. When the cash processing machine 10 is controlled using a native application or a hybrid application in the terminal apparatus 20, APIs using the resources of the terminal apparatus 20 (for example, a camera, a fingerprint identification sensor and the like) can be used. Accordingly, the operator can be identified also by biological information (for example, face identification, fingerprint identification or the like).

Alternatively, the server 30 does not necessarily comprise the application providing section 31A, but the application program may be provided for the terminal apparatus 20 by a mechanism (for example, an application market) different from the server 30.

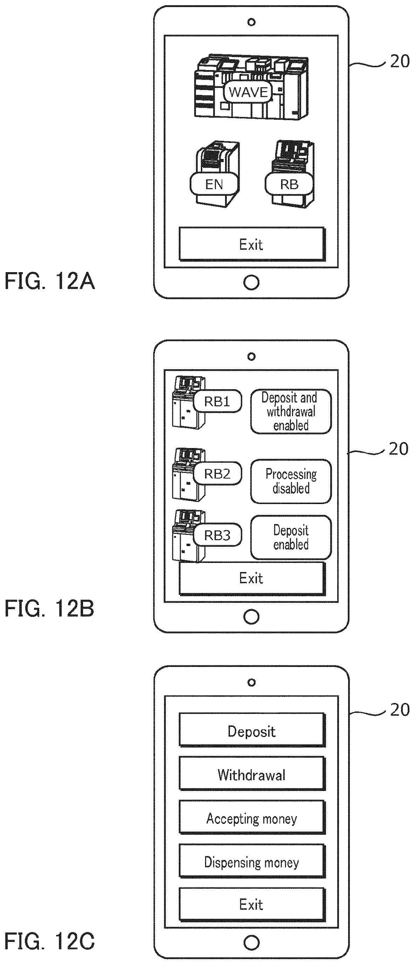

The mode of presenting information on the service providing screen is not limited to the modes described in the embodiments. The mode can be appropriately customized. For example, specific screen transition of the service providing screens in the case of causing the cash processing machine 10 to execute desired cash processing may be a mode illustrated in FIGS. 12A to 12C. In this case, on the service providing screen illustrated in FIG. 12A, the machine type is selected. On the service providing screen illustrated in FIG. 12B, the cash processing machine 10 to be caused to execute cash processing is selected. On the service providing screen illustrated in FIG. 12C, the type of cash processing to be executed by the selected cash processing machine 10, is selected. On the screen illustrated in FIG. 12B, the processes executable by the cash processing machine 10 may be presented.

Thus, in the server 30, the control section 31 (relay processing section 31B) may present cash processing (function) executable by the cash processing machine 10, in response to the processing request that is issued by the terminal apparatus 20 and includes designation of the control-target cash processing machine 10. Accordingly, as with the case described in the embodiments, the operator can easily set the contents of the cash processing to be executed by the cash processing machine 10.

When the control-target cash processing machine 10 is selected on the providing screen illustrated in FIG. 12B, the control section 31 (relay processing section 31B) of the server 30 may bring the state of the cash processing machine 10 to "Provisionally occupied state" to perform exclusive control for the processing request by another terminal apparatus 20.

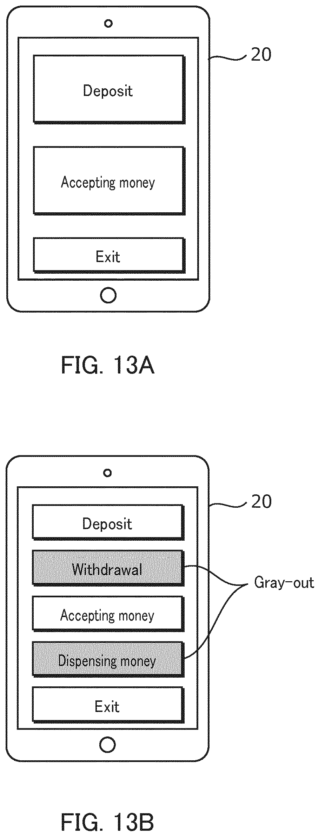

Levels of authorization of operators may be defined, and cash processing machines 10 that can be controlled may be limited, and the types of cash processing to be executed by the cash processing machines 10 may be limited. For example, the relay processing section 31B can disable the control of the money management machine 10A by operators having an authorization level lower than a predetermined level, and disable the withdrawing process in the cash processing machine 10 by operators having an authorization level lower than a predetermined level. In this case, the service providing screens illustrated in FIGS. 9A and 12C are not adopted, and only processable items of cash processing are adopted as alternatives instead as illustrated in FIG. 13A. Alternatively, as shown in FIG. 13B, presentation may be made in a mode where the processing-disabled cash processing cannot be selected (for example, gray-out display). Information pertaining to the authorization levels of the operators is, for example, associated with the identification information and pre-stored in the storage section 32. The relay processing section 31B can obtain the information pertaining to the authorization levels of the operators, from the storage section 32.

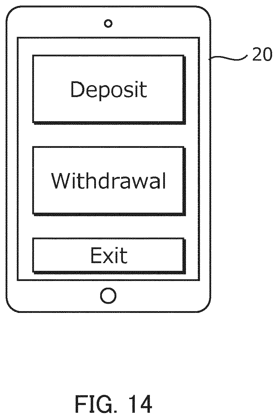

Furthermore, as illustrated in FIG. 14, the service providing screen may be allowed to be localized so as to present information in a language in a country where the cash processing system 1 is installed.

According to the embodiments, in the server 30, the control section 31 executes the service providing program 321 and functions as the application providing section 31A and the relay processing section 31B, thereby achieving the present invention. Alternatively, a program for achieving the application providing section 31A and a program for achieving the relay processing section 31B may be individually prepared. Some or all the functions may be configured by electronic circuits, such as DSP (Digital Signal Processor), ASIC (Application Specific Integrated Circuit), or PLD (Programmable Logic Device).

It should be construed that the embodiments disclosed here are only examples in all respects, and are not limitational. The scope of the present invention is not represented by the above description but is indicated by the appended claims instead, and is intended to include all modifications equivalent to the claims and within the scope of the claims.

The disclosure of the specification, accompanying drawings, and abstract included in Japanese Patent Application No. 2017-021169 filed on February 8, 2017 is incorporated in this application by reference.

### Reference Signs List

1 Cash processing system
10 Cash processing machine
20 Terminal apparatus
30 Server
31 Control section
31A Application providing section
31B Relay processing section

## Claims

1. A cash processing system, comprising: a plurality of cash processing machines that have a function pertaining to common cash processing; a terminal apparatus that controls operations of the cash processing machines; and a server to be connected to the cash processing machines and the terminal apparatus via a network, wherein:
the cash processing machines comprise device interfaces that are different for each machine type, and
the server comprises:
an application providing section that provides the terminal apparatus with an application program provided with a common interface for achieving the function; and
a relay processing section that receives a processing request in conformity with the common interface designated by execution of the application program in the terminal apparatus, converts the processing request into a processing request in conformity with one of the device interfaces for each machine type, and passes the converted processing request to at least one of the cash processing machines which is to be controlled.

2. The cash processing system according to claim 1, wherein the relay processing section presents a state of the cash processing machine in response to a processing request by the terminal apparatus, the state being held in advance by the server.

3. The cash processing system according to claim 2, wherein the relay processing section presents the cash processing machine capable of executing the function in response to the processing request by the terminal apparatus, the processing request including designation of the function.

4. The cash processing system according to claim 2, wherein the relay processing section presents the function executable in the cash processing machine in response to the processing request by the terminal apparatus, the processing request including designation of the at least one of the cash processing machines which is to be controlled.

5. The cash processing system according to any one of claims 1 to 4, wherein, when the relay processing section determines that the processing designated by the processing request from the terminal apparatus is inexecutable by the cash processing machine, the relay processing section notifies the terminal apparatus of inexecutability of the process, and stops the process.

6. The cash processing system according to any one of claims 1 to 5, wherein the relay processing section limits the cash processing machines that are controllable, or types of the cash processing to be executed by the cash processing machine, based on an authorization level of an operator handling the cash processing machine.

7. The cash processing system according to any one of claims 1 to 6, wherein the common interface is a web application program interface (WebAPI).
